# EUROPÄISCHE PATENTSCHRIFT

(11) **EP 3 866 663 B1**
(45) Veröffentlichungstag und Bekanntmachung des Hinweises auf die Patenterteilung: **02.08.2023**
(21) Anmeldenummer: 19779889.5
(22) Anmeldetag: 30.09.2019
(51) Int. Cl.: A47L 15/42, B01D 29/03, B01D 29/68, B01D 35/12

(54) **HAUSHALTS-GESCHIRRSPÜLMASCHINE MIT EINEM SELBSTREINIGENDEN FILTERSYSTEM**
DOMESTIC DISHWASHER HAVING SELF-CLEANING FILTER SYSTEM
LAVE-VAISSELLE MÉNAGER POURVU D'UN SYSTÈME DE FILTRE AUTONETTOYANT

(30) Priorität: 19.10.2018 DE 102018217915
(43) Veröffentlichungstag der Anmeldung: 25.08.2021
(73) Patentinhaber: BSH Hausgeräte GmbH, 81739 München (DE)
(72) Erfinder: HEISELE, Bernd, 89567 Sontheim (DE); OBLINGER, Anton, 86637 Wertingen (DE)
(86) Internationale Anmeldenummer: PCT/EP2019/076433
(87) Internationale Veröffentlichungsnummer: WO 2020/078705

(56) Entgegenhaltungen:
- DE-A1-102007 061 038
- DE-A1-102014 221 611
- DE-B- 1 166 738
- DE-C1- 4 433 842
- DE-C2- 3 745 169

## Beschreibung

Die vorliegende Erfindung betrifft eine Haushalts-Geschirrspülmaschine mit einem selbstreinigenden Filtersystem.

Selbstreinigende Filtersysteme sind grundsätzlich bekannt und beispielsweise in DE 91 02 957 U, DE 10 2007 056 919 A1 und DE 10 2007 061 036 A1 beschrieben.

Ferner offenbart die DE 37 45 169 C2 eine Geschirrspülmaschine mit einem Spülbehälter, einer Zuflußleitung für den Spülbehälter, einer Austragspumpe, einer Einrichtung zum Erzeugen einer Umlaufwasserströmung des in den Spülbehälter eingelassenen Waschwassers, wobei die Strömung in einer Richtung durch ein becherförmiges Filter tritt; und mit wenigstens einer weiteren Leitung, die an einem Ende mit der Zuflußleitung verbunden ist und am anderen Ende eine Austrittsöffnung für einen auf das becherförmige Filter entgegen der Richtung der Umlaufwasserströmung einwirkenden Spülwasserstrahl aufweist, wobei das becherförmige Filter drehbar auf einem Zapfen gelagert ist, ein Mittel zur Drehung des Filters während eines Filterreinigungsvorgangs vorgesehen ist, der Spülwasserstrahl etwa tangential auf eine Wand des becherförmigen Filters auftrifft und die Geschirrspülmaschine so ausgebildet ist, dass sauberes Wasser aus der Austrittsöffnung austritt, während gleichzeitig die Austragspumpe weiter in Betrieb bleibt.

Die DE 44 33 842 C1 offenbart eine Vorrichtung zum Spülen in einer Geschirrspülmaschine mit einem Spülwasser-Kreislauf, in der das Spülwasser mittels einer Umwälzpumpe aus dem Sumpf der Waschkammer abgesaugt und über ein hohlzylinderförmiges Filter geleitet, den Sprühvorrichtungen in der Waschkammer zugeführt wird, wobei das Filter während des gesamten Spülvorganges im Gegenstrom mit Reinigungswasser gereinigt wird, wobei das Reinigungswasser zusammen mit dem Spülwasser dem Spülwasser-Kreislauf zugeführt wird, wobei das Filter im Boden eines Filtergehäuses unter Bildung einer ringförmigen Kammer drehbar gelagert ist, das Filter an seiner unteren Stirnseite mit einem Eingang für das zu filternde Spülwasser versehen und auf der gegenüberliegenden oberen Stirnseite geschlossen ist, die geschlossene Stirnseite des Filters mittels einer Welle mit der drehbar gelagerten unteren Sprühvorrichtung drehfest verbunden ist, das Filtergehäuse mit einem Eingang für das Reinigungswasser versehen ist, und der dem Eingang für das zu filternde Spülwasser abgekehrte Ausgang des Filtergehäuses mit der unteren Sprühvorrichtung leitend verbunden ist.

Weiterhin offenbart die DE 11 66 738 B eine Vorrichtung zum Nassbehandeln von band- oder strangförmigem Gut, insbesondere von Textilgut, Vliesen und Folien, bestehend aus Behälter mit Umwälzpumpe und einer Reinigungsvorrichtung für die Flotte.

Gleichwohl sind derzeit nach wie vor von Hand zu reinigende Filtersysteme weit verbreitet. Diese sehen ein Flächensieb, ein Grobsieb sowie ein Mikrosieb vor. Das Flächensieb deckt den Pumpentopf am Boden des Spülbehälters ab. Das Mikrosieb ist, wie auch das Grobsieb, zylindrisch ausgebildet. Das Grobsieb reicht in das Mikrosieb hinein und hält dieses unterhalb einer Öffnung im Flächensieb im dem Pumpentopf. Weiter sind eine Umwälzpumpe und eine Laugenpumpe vorgesehen. Die Umwälzpumpe saugt im Spülbetrieb Spülflotte durch die vorgenannten Siebe. Dabei fließt ein erster Teil der Spülflotte durch das Flächensieb, ein zweiter Teil der Spülflotte durch das Grobsieb und das Mikrosieb. Über einen gesamten Spülvorgang hinweg fließt jedoch - statistisch - sämtliche Spülflotte auch durch das Mikrosieb. Diese Ausgestaltung hat den Sinn, dass sich das Mikrosieb nicht zu schnell mit Schmutz zusetzen soll. Im Grobsieb sammeln sich über die Zeit größere Teilchen, wie etwa Kerne. Die Laugenpumpe hat dagegen die Aufgabe, am Ende eines jeweiligen Spülzyklus das Schmutzwasser aus der Haushalts-Geschirrspülmaschine herauszupumpen. Dabei erfolgt auch eine Abreinigung von am Mikrosieb anhaftenden Partikeln. Jedoch gewährleistet die Laugenpumpe keine vollständige Abreinigung, so dass sich das Mikrosieb in der Regel nach 20 bis 30 Spülzyklen weitestgehend zusetzt. Spätestens zu diesem Zeitpunkt muss ein Kunde das Grob- und Mikrosieb aus der Öffnung im Flächensieb herausnehmen und manuell, beispielsweise unter dem Wasserhahn, reinigen.

Eine solche manuelle Reinigung ist in mehrerlei Hinsicht nicht ideal. Einmal stellt es einen zusätzlichen Aufwand für den Kunden dar. Weiterhin erfolgt die Reinigung meist nicht regelmäßig, so dass die Spülleistung der Haushalts-Geschirrspülmaschine über einen längeren Zeitraum reduziert sein kann. Ferner kann es zu einem fehlerhaften Einbau der Siebe durch den Kunden kommen. Schließlich besteht die Gefahr eines Schmutzeintrags beim Tauschen der Siebe.

Vor diesem Hintergrund besteht eine Aufgabe der vorliegenden Erfindung darin, eine verbesserte Haushalts-Geschirrspülmaschine mit einem selbstreinigenden Filtersystem bereitzustellen.

Gemäß einem ersten Aspekt der Erfindung wird eine Haushalts-Geschirrspülmaschine mit einem selbstreinigenden Filtersystem bereitgestellt. Diese umfasst ein drehbar gelagertes Filterelement zum Filtern von Spülflotte, eine Antriebseinrichtung, welche dazu eingerichtet ist, das Filterelement um eine Drehachse zu drehen, und eine Reinigungsdüse, welche dazu eingerichtet ist, je nach Drehstellung des Filterelements unterschiedliche Teilbereiche des Filterelements mithilfe eines Wasserstrahls zu reinigen.

Indem jeweils immer nur ein Teilbereich zu einem bestimmten Zeitpunkt mithilfe des Wasserstrahls gereinigt wird, kann eine besonders gründliche, weil fokussierte Reinigung erfolgen. Außerdem werden nur eine oder wenige Reinigungsdüsen benötigt, um die Reinigung zu gewährleisten. Dadurch baut das vorliegende Filtersystem klein beziehungsweise ist wenig komplex.

Unter einem selbstreinigenden Filtersystem wird vorliegend ein Filtersystem verstanden, welches eine Reinigung des Filtersystems vorsieht, ohne dass diese manuell durch einen Kunden durchgeführt werden muss.

Bei dem Filterelement kann es sich grundsätzlich um jede Art von Filterelement oder Siebe handeln. Das Filterelement kann beispielsweise aus Metall, insbesondere Blech, Kunststoff und/oder einem Fasermaterial hergestellt sein.

Unter Spülflotte ist vorliegend ein Gemisch aus Wasser und Reinigungsmittel zu verstehen. Das Reinigungsmittel kann Fettlöser etc. enthalten.

Die Antriebseinrichtung kann beispielsweise als Elektromotor ausgebildet sein.

Unter einer Reinigungsdüse wird vorliegend eine technische Vorrichtung verstanden, welche einen Wasserstrahl umlenkt und/oder beschleunigt.

Das Filterelement weist zumindest zwei Drehstellungen um die Drehachse auf. Es können aber auch bedeutend mehr Drehstellungen vorgesehen sein. Bei den Teilbereichen kann es sich um beispielsweise Segmente des Filterelements handeln. Beispielsweise kann es sich um ein 180°-Segment, ein 120°-Segment, ein 90°-Segment, ein 60°-Segment oder ein 30°-Segment handeln. Entsprechend ergibt sich die Anzahl der unterschiedlichen Teilbereiche, indem man 360° durch die vorgenannten Winkelbereiche der jeweiligen Segmente teilt. Im Falle von 120°-Segmenten ergeben sich somit drei unterschiedliche Teilbereiche. Die Teilbereiche können jedoch auch unterschiedliche Winkel aufweisen. So kann beispielsweise ein 180°-Segment mit zwei 90°-Segmenten kombiniert werden.

Bei dem Wasserstrahl kann es sich insbesondere um einen Frischwasserstrahl oder einen Spülflottenstrahl handeln.

Die Haushalts-Geschirrspülmaschine umfasst einen Pumpentopf, in welchem das Filterelement drehbar gelagert vorgesehen ist und wobei im Spülbetrieb der Haushalts-Geschirrspülmaschine ein erster Teilbereich des Filterelements von Spülflotte durchströmt und ein zweiter Teilbereich des Filterelements oberhalb der Spülflottenoberfläche angeordnet ist, wobei die Reinigungsdüse dazu eingerichtet ist, den zweiten Teilbereich zu reinigen.

Dadurch wird vorteilhaft der verschmutzte zweite Teilbereich gereinigt, während der saubere erste Teilbereich die gewünschte Reinigung leistet. Stellt die Haushalts-Geschirrspülmaschine, insbesondere eine Steuereinrichtung derselben, fest, dass sich der erste Teilbereich zusetzt (verschmutzt), so kann das Filterelement beispielsweise um 180° gedreht werden. Anschließend wird der erste Teilbereich mithilfe der Reinigungsdüse gereinigt und der zweite Teilbereich von Spülflotte durchströmt.

Gemäß einer weiteren Ausführungsform ist die Reinigungsdüse oberhalb der Spülflottenoberfläche angeordnet.

Dadurch kann der Wasserstrahl über eine freie Strecke auf den entsprechenden Teilbereich des Filterelements beschleunigt werden und diesen dadurch effektiv reinigen.

Die Drehachse des Filterelements ist horizontal angeordnet.

Dadurch lassen sich der erste Teilbereich in der Spülflotte und der zweite Teilbereich oberhalb der Spülflottenoberfläche einfach drehen, um deren Position in vertikaler Richtung zu vertauschen.

Gemäß einer weiteren Ausführungsform ist das Filterelement ein Feinsieb.

Unter einem Feinsieb werden vorliegend Siebe verstanden, welche eine Lochung kleiner oder gleich 0,1 mm aufweisen.

Gemäß einer weiteren Ausführungsform weist das Filtersystem zusätzlich ein Grobsieb und/oder ein Flächensieb auf.

Das Grobsieb kann beispielsweise als Kunststoffkäfig ausgebildet sein und/oder dazu eingerichtet sein, Partikel größer 0,5 mm zurückzuhalten. Das Grobsieb kann dem Feinsieb vorgeschaltet sein, so dass ein Spülflottenstrom zunächst zwingend durch das Grobsieb fließen muss, bevor er zum Feinsieb gelangt. Weiter kann das Flächensieb eine Lochung von beispielsweise 0,1 bis einschließlich 0,8 mm aufweisen. Während das Feinsieb und/oder Grobsieb zylindrisch, insbesondere kreiszylindrisch ausgebildet sein können, ist das Flächensieb flächig ausgebildet.

Gemäß einer weiteren Ausführungsform ist eine Umwälzpumpe vorgesehen, welche dazu eingerichtet ist, die Spülflotte in der Haushalts-Geschirrspülmaschine umzuwälzen, wobei die Umwälzpumpe die Spülflotte über einen Querschnitt aus dem Pumpentopf ansaugt und das Filterelement den gesamten Querschnitt verschließt.

Dadurch ist gewährleistet, dass sämtliche Spülflotte, welche mithilfe der Umwälzpumpe aus dem Pumpentopf zu Sprüheinrichtungen im Spülbehälter gepumpt wird, durch das Filterelement fließt und von diesem gereinigt wird. Die Gefahr eines frühzeitigen Zusetzens des Filterelements besteht hier - im Unterschied zu dem einleitend beschriebenen händisch zu reinigenden Filtersystem - nicht, weil das Filterelement mithilfe der Reinigungsdüse und der Antriebseinrichtung insbesondere auch während eines Spülzyklus geeignet gereinigt werden kann.

Gemäß einer weiteren Ausführungsform durchströmt ein erster Teil der angesaugten Spülflotte das Grobsieb und/oder ein Feinsieb sowie ein zweiter Teil der angesaugten Spülflotte das Flächensieb.

Dadurch kann der Strömungswiderstand niedrig gehalten werden.

Gemäß einer weiteren Ausführungsform ist ein Frischwasseranschluss vorgesehen, welcher dazu eingerichtet ist, die Reinigungsdüse mit Frischwasser zwecks Erzeugens des Wasserstrahls zu beaufschlagen.

Dadurch, dass (reines) Frischwasser verwendet wird, kann das Filterelement besonders gründlich gereinigt werden.

Gemäß einer weiteren Ausführungsform ist eine Umwälzpumpe vorgesehen, welche dazu eingerichtet ist, die Spülflotte in der Haushalts-Geschirrspülmaschine umzuwälzen. Weiter ist eine Wasserweiche vorgesehen, welche dazu eingerichtet ist, die Reinigungsdüse mit der umgewälzten Spülflotte oder einer Teilmenge derselben zwecks Erzeugens des Wasserstrahls zu beaufschlagen.

Vorteilhaft wird bei dieser Lösung bereits im Haushaltsgerät vorhandene Spülflotte verwendet, um das Filterelement zu reinigen.

Gemäß einer dazu alternativen Ausführungsform ist eine erste Umwälzpumpe, welche dazu eingerichtet ist, die Spülflotte in der Haushalts-Geschirrspülmaschine umzuwälzen, und eine zweite Umwälzpumpe vorgesehen, welche dazu eingerichtet ist, die Reinigungsdüse mit Spülflotte und/oder Frischwasser zwecks Erzeugens des Wasserstrahls zu beaufschlagen.

Entsprechend wird also eine separate Umwälzpumpe zusätzlich zu der (herkömmlich) bestehenden Umwälzpumpe vorgesehen, welche speziell für Reinigung des Filterelements zuständig ist.

Gemäß einer weiteren Ausführungsform ist eine Steuereinrichtung vorgesehen, welche dazu eingerichtet ist, die Haushalts-Geschirrspülmaschine zum Ausführen eines Spülprogramms anzusteuern, wobei die Steuereinrichtung ferner dazu eingerichtet ist, das selbstreinigende System vor, zu Beginn, während und/oder zum Ende des Spülprogramms zur Reinigung zumindest eines Teilbereichs des Filterelements anzusteuern.

Dadurch kann eine bedarfsgerechte Reinigung des Filterelements vorgesehen werden. Insbesondere kann vorgesehen sein, dass ein und derselbe Teilbereich des Filterelements während des Spülprogramms mehrfach gereinigt wird. Dadurch lässt sich ein Filterelement mit kleinerem Durchströmungsquerschnitt verwenden. Weiter kann vorgesehen sein, dass während des Spülprogramms zwei, drei oder mehr unterschiedliche Teilbereiche des Filterelements zu unterschiedlichen Zeitpunkten mithilfe der Reinigungsdüse gereinigt werden.

Gemäß einer weiteren Ausführungsform weisen die unterschiedlichen Teilbereiche, insbesondere der erste und zweite Teilbereich, des Filterelements eine Lochung mit unterschiedlichen Lochdurchmessern auf.

Je nach Drehstellung des Filterelements um die Drehachse wird der erste oder zweite Teilbereich von der Spülflotte durchströmt. Entsprechend ergibt sich in den unterschiedlichen Drehstellungen eine unterschiedliche Reinigungsleistung. Damit lässt sich die Reinigungsleistung einfach an beispielsweise das Spülprogramm anpassen.

Gemäß einer weiteren Ausführungsform ist eine Steuereinrichtung vorgesehen, welche dazu eingerichtet ist, die Haushalts-Geschirrspülmaschine zum Ausführen eines Spülprogramms mit zumindest einem ersten und einem zweiten Spülprogrammabschnitt anzusteuern, wobei die Steuereinrichtung ferner dazu eingerichtet ist, das selbstreinigende Filtersystem derart anzusteuern, dass während des ersten Spülprogrammabschnitts der erste Teilbereich des Filterelements und während des zweiten Spülprogrammabschnitts der zweite Teilbereich des Filterelements von Spülflotte durchströmt ist.

Sind der erste und zweite Teilbereich des Filterelements unterschiedlich gestaltet sind, beispielsweise mit einer unterschiedlichen Lochung beziehungsweise unterschiedlichen Lochdurchmessern, so ergeben sich während des ersten und zweiten Spülprogrammabschnitts unterschiedliche Reinigungsleistungen. Beispielsweise kann der erste Spülprogrammabschnitt ein Vorspülen und der zweite Spülprogrammabschnitt ein Klarspülen sein.

Es ist vor dem Filterelement eine Absinkzone vorgesehen, welche dazu eingerichtet ist, von dem ersten und/oder zweiten Teilbereich des Filterelements mithilfe des Wasserstrahls abgereinigte Partikel aufzunehmen, wobei ein Höhenniveau der Absinkzone unterhalb einer Unterkante des Filterelements liegt und wobei eine Laugenpumpe vorgesehen ist, welche ihren Sauganschluss angrenzend an die Absinkzone aufweist.

Dadurch kann auf einfache Weise eine Zone geschaffen werden, in der sich während eines Spülzyklus Schmutz ansammelt. Dieser wirkt sich jedoch nicht negativ auf die Filterleistung des Filterelements aus.

Gemäß einem zweiten Aspekt der Erfindung wird ein Verfahren zum Betreiben eines selbstreinigenden Filtersystems in einer Haushalts-Geschirrspülmaschine gemäß dem unabhängigen Verfahrensanspruch bereitgestellt. Somit wird ein Filterelement in unterschiedlichen Teilbereichen mithilfe eines Wasserstrahls gereinigt, wozu es in unterschiedliche Drehstellungen gedreht wird.

Gemäß einem dritten Aspekt, welcher jedoch nicht Gegenstand der Erfindung und der vorliegenden Ansprüche ist, wird eine Haushalts-Geschirrspülmaschine mit einem selbstreinigenden Filtersystem bereitgestellt. Das Filtersystem umfasst ein Filterelement zum Filtern von Spülflotte, eine Laugenpumpe zum Abpumpen von Spülflotte aus der Haushalts-Geschirrspülmaschine und eine Reinigungsdüse, welche dazu eingerichtet ist, das Filterelement mithilfe eines Wasserstrahls zu reinigen, wobei die Laugenpumpe eine Saugseite und eine Druckseite aufweist, wobei die Reinigungsdüse mit der Saugseite zum Erzeugen des Wasserstrahls fluidleitend verbunden ist.

Dadurch wird vorteilhaft die von der Laugenpumpe saugseitig aufgebaute Saugwirkung genutzt, um den Wasserstrahl zu erzeugen und damit die Abreinigung des Filterelements zu gewährleisten.

Gemäß einer Ausführungsform trifft der Wasserstrahl unter einem Winkel von kleiner 90°, bevorzugt kleiner 80°, weiter bevorzugt kleiner 50° auf das Filterelement auf.

Gemäß einer weiteren Ausführungsform ist ein Pumpentopf vorgesehen, in welchem das Filterelement vorgesehen ist, wobei bei einem Spülbetrieb der Haushalts-Geschirrspülmaschine das Filterelement vollständig, das heißt über seinen gesamten Filterquerschnitt, von Spülflotte durchströmt ist. In diesem Fall wird der Wasserstrahl unterhalb der Spülflottenoberfläche erzeugt und reinigt somit das Filterelement "unter Wasser".

Gemäß einer weiteren Ausführungsform ist ein Deckel vorgesehen, welcher die Saugseite der Laugenpumpe teilweise abdeckt. Die Reinigungsdüse ist an oder in dem Deckel ausgebildet. Beispielsweise kann die Reinigungsdüse als Durchbruch in dem Deckel ausgebildet werden. Der Deckel hat die Funktion, einen Gegendruck an der Saugseite aufzubauen, welcher es einem Pumpenrad der Laugenpumpe erlaubt, die Spülflotte von der Saugseite zur Druckseite zu befördern und dadurch aus der Haushalts-Geschirrspülmaschine abzupumpen.

Gemäß einem vierten Aspekt, welcher jedoch nicht Gegenstand der Erfindung und der vorliegenden Ansprüche ist, wird ein Verfahren zum Betreiben eines selbstreinigenden Filtersystems in einer Haushalts-Geschirrspülmaschine bereitgestellt, wobei ein Filterelement mithilfe eines Wasserstrahls gereinigt wird, welcher in einer Laugenpumpe saugseitig erzeugt wird. Für das Verfahren gelten die vorstehend in Bezug auf die Haushalts-Geschirrspülmaschine erläuterten Merkmale und Vorteile entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen, sofern diese Implementierungen unter die vorliegenden Ansprüche fallen. Die Vorrichtungsmerkmale gelten für die Verfahrensmerkmale entsprechend, und umgekehrt. Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform einer Haushalts-Geschirrspülmaschine;
Fig. 2 zeigt in perspektivischer Ansicht das selbstreinigende Filtersystem gemäß einer Ausführungsform; und
Fig. 3 zeigt stark schematisiert einen Schnitt III-III aus Fig. 2;
Fig. 4 zeigt eine Ansicht IV aus Fig. 3;
Fig. 5 zeigt im Querschnitt ein selbstreinigendes Filtersystem gemäß einer weiteren Ausführungsform; und
Fig. 6 zeigt eine Ansicht VI aus Fig. 5.

In den Figuren sind gleiche oder funktionsgleiche Elemente mit denselben Bezugszeichen versehen worden, sofern nichts anderes angegeben ist.

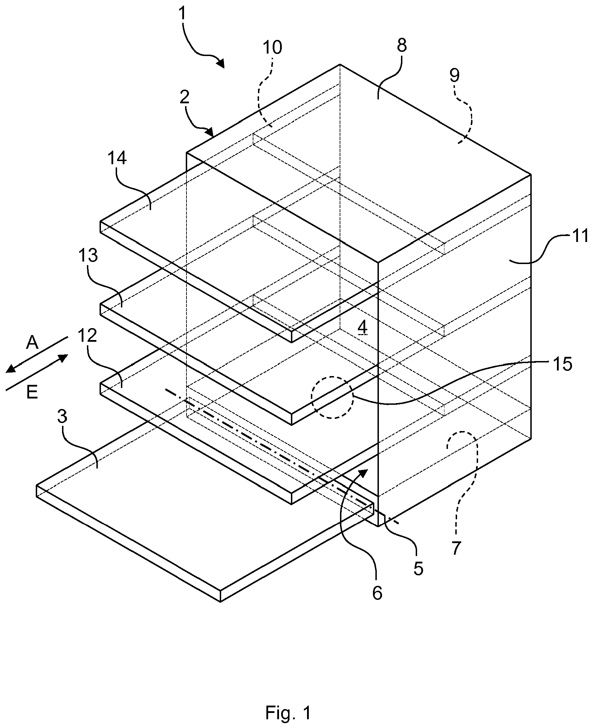

Die Fig. 1 zeigt eine schematische perspektivische Ansicht einer Ausführungsform einer Haushalts-Geschirrspülmaschine 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugweise quaderförmig. Der Spülbehälter 2 kann in einem Gehäuse der Haushalts-Geschirrspülmaschine 1 angeordnet sein. Der Spülbehälter 2 und die Tür 3 können eine Spülkammer 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

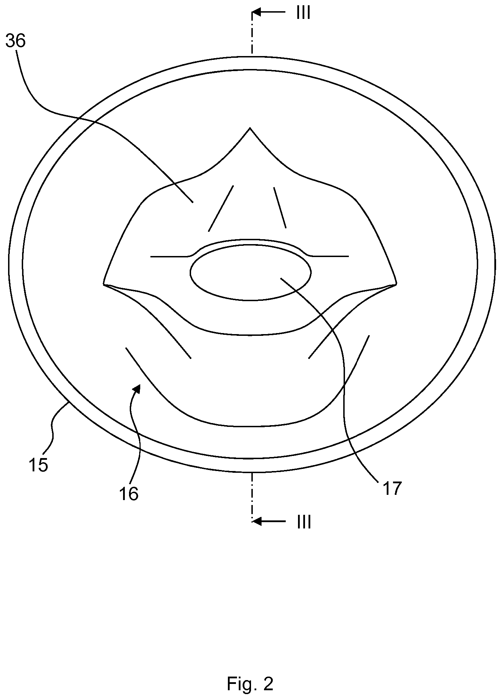

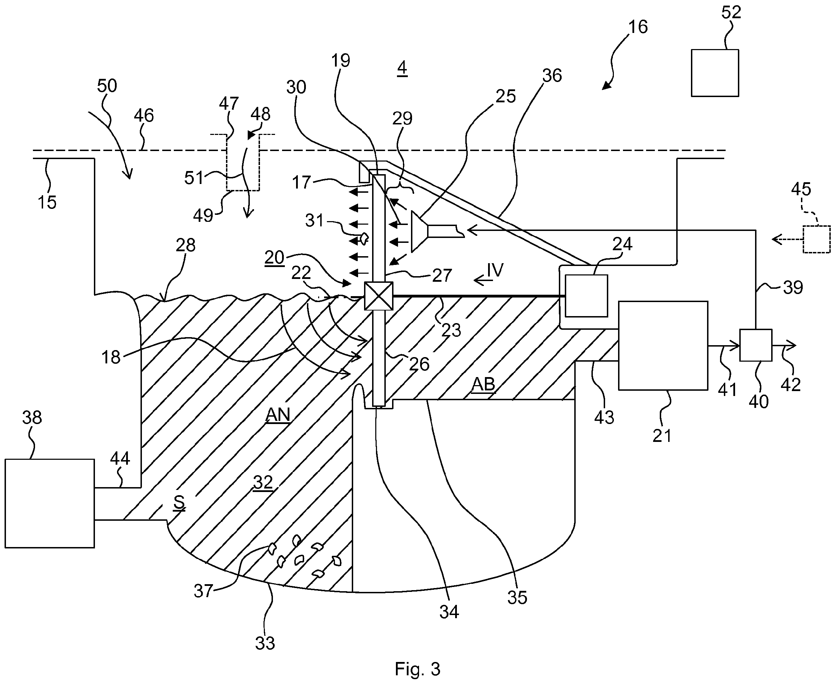

Im Boden 7 des Spülbehälters 2 ist ein Pumpentopf 15 vorgesehen, welcher ein in Fig. 2 mit 16 bezeichnetes Filtersystem aufnimmt. Fig. 2 zeigt den Pumpentopf 15 samt Filtersystem 16 in einer perspektivischen Ansicht von schräg oben. Fig. 3 zeigt einen Schnitt III-III aus Fig. 2 in stark schematisierter Weise.

Das Filtersystem 16 umfasst ein Filterelement 17 zum Reinigen von Spülflotte 18. Das Filterelement 17 ist hier als Feinsieb mit einer Lochung ausgebildet, wobei ein jeweiliger Lochdurchmesser beispielsweise 0,1 mm beträgt. Das Filterelement 17 ist beispielsweise als kreisrunde Scheibe ausgebildet. An seiner Außenkontur 19 dichtet es einen Gehäusequerschnitt 20 vollständig ab. Über den Gehäusequerschnitt 20 und einen Anschluss 43 am Pumpentopf 15 saugt eine Umwälzpumpe 21 im Spülbetrieb der Haushalts-Geschirrspülmaschine 1 die Spülflotte 18 aus der Spülkammer 4 an und führt diese ebenfalls in der Spülkammer 4 angeordneten Sprüheinrichtungen zu. Die Sprüheinrichtungen sind in den Figuren nicht gezeigt. Bei diesen kann es sich beispielsweise um Sprüharme handeln.

Das Filterelement 17 ist um eine Achse 22 drehbar gelagert vorgesehen. Die Drehachse 22 ist vorzugsweise horizontal vorgesehen. Dies umfasst vorliegend auch Abweichungen von bis zu 10°, vorzugsweise von bis zu 5°, weiter vorzugsweise bis zu 2° von der genau horizontalen Richtung. Zur drehbaren Lagerung ist das Filterelement 17 drehfest auf einer Welle 23 vorgesehen. Das Filterelement 17 bzw. die Scheibe mit ihrer Haupterstreckungsebene ist dabei vertikal angeordnet. Dies umfasst vorliegend auch Abweichungen von bis zu 10°, vorzugsweise von bis zu 5°, weiter vorzugsweise bis zu 2° von der genau vertikalen Richtung.

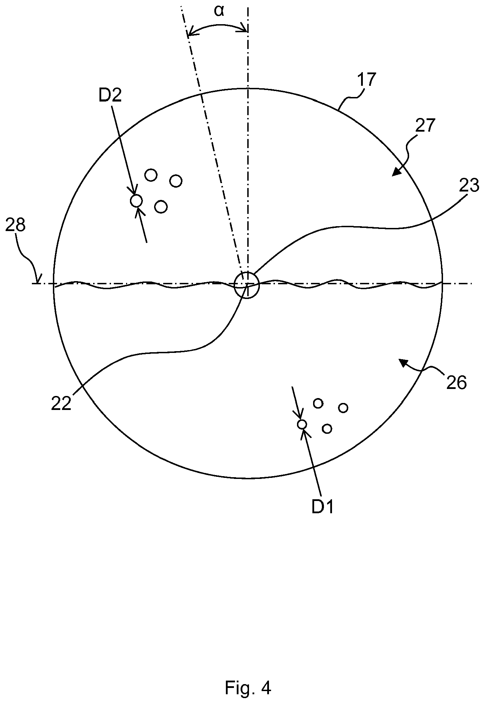

Das Filtersystem 16 umfasst des Weiteren eine Antriebseinrichtung 24 in Form eines Elektromotors. Mithilfe der Antriebseinrichtung 24 ist das Filterelement 17 in verschiedene Drehstellungen um die Drehachse 22 drehbar, hier angedeutet durch den Winkel α in Fig. 4, welche eine Ansicht IV aus Fig. 3 zeigt. Unabhängig von der Drehstellung α dichtet jedoch das Filterelement 17 ständig den Gehäusequerschnitt 20 vollständig ab.

Weiter umfasst das Filtersystem 16 eine Reinigungsdüse 25. Die Reinigungsdüse 25 ist dazu eingerichtet, - zu einem jeweiligen Zeitpunkt - einen von mehreren Teilbereichen des Filterelements 17 zu reinigen. Beispielsweise umfasst das Filterelement 17, wie in Fig. 4 zu sehen, einen ersten Teilbereich 26 und eine zweiten Teilbereich 27. Der erste und zweite Teilbereich 26, 27 sind in Fig. 4 durch eine waagrechte, gestrichelte Linie voneinander getrennt dargestellt. Entsprechend sind die Teilbereiche 26, 27 jeweils halbkreisförmig ausgebildet, bilden also jeweils Segmente von 180°. Es können auch mehr als zwei Teilbereiche, beispielsweise drei, vier oder fünf vorgesehen sein.

Im vorhergehenden Ausführungsbeispiel unterscheiden sich der erste und zweite Teilbereich 26, 27 lediglich dadurch, dass sie in dem gezeigten Zustand des selbstreinigenden Filtersystems 16 auf unterschiedlicher Höhe (bezogen auf die Schwerkraft) angeordnet sind (siehe Fig. 3). So ist der erste Teilbereich 26 unterhalb der Spülflottenoberfläche 28 (Wasseroberfläche) in dem Pumpentopf 15 angeordnet. Der zweite Teilbereich 27 ist dagegen oberhalb der Spülflottenoberfläche 28 angeordnet. Während des Spülbetriebs wird der erste Teilbereich 26 durchströmt und filtert Partikel aus der Spülflotte 18 heraus. Der zweite Teilbereich 27 ist dagegen von Luft umgeben und wird über eine freie Strecke 29 hinweg von der Reinigungsdüse 25 mithilfe eines Wasserstrahls 30 (je nach Ausführungsform auch Spülflottenstrahl, wie später noch näher erläutert) gereinigt.

Die Reinigungsdüse 25 ist bezogen auf das Filterelement 17 abströmseitig - gekennzeichnet durch das Bezugszeichen AB - und nicht anströmseitig - gekennzeichnet mit dem Bezugszeichen AN - angeordnet, und der Wasserstrahl 30 von der Abströmseite AB zur Anströmseite AN gerichtet ist. Entsprechend werden beispielhaft mit 31 bezeichnete Partikel an der Anströmseite AN von dem Filterelement 17 gelöst. Diese fallen sodann in eine Absinkzone 33, welche ebenfalls anströmseitig vorgesehen ist. Die Absinkzone 32 wird durch einen Gehäuseabschnitt des Pumpentopfes 15 gebildet, dessen Boden 33 unterhalb einer Unterkante 34 des Filterelements 17 liegt.

Entsprechend weist der Pumpentopf 15 einen gegenüber dem Boden 33 erhöhten Gehäuseabschnitt 35 auf, welcher u. a. die Abdichtung an der Unterkante 34 des Filterelements 17 gewährleistet. Der Gehäuseabschnitt 35 kann zusammen mit einem Gehäuseabschnitt 36 (siehe auch Fig. 2) den geschlossenen Gehäusequerschnitt 20 definieren. Es ist möglich, dass die Gehäuseabschnitt 35 und 36 als ein separates Kunststoffbauteil, insbesondere Spritzgussbauteil, gefertigt werden, welches in dem Pumpentopf 15 eingesetzt wird. Der Gehäuseabschnitt 36 bzw. das Kunststoffbauteil kann die Antriebseinrichtung 23 aufnehmen.

Am Boden 33 angelagerte (abgesunkene) Partikel 37 werden von einer Laugenpumpe 38 - beispielsweise am Ende eines jeweiligen Spülzyklus - über einen Anschluss 44 am Pumpentopf 15 in einen Abwasseranschluss (nicht gezeigt) der Haushalts-Geschirrspülmaschine 1 gepumpt und dadurch aus dieser herausbefördert.

Nun zurückkehrend zur Reinigungsdüse 25 ist gezeigt, dass diese zur Erzeugung des Wasserstrahls 30 mit Spülflotte 39 beaufschlagt wird. Dazu wird mithilfe einer Wasserweiche 40 ein Teil des von der Umwälzpumpe 21 erzeugten Spülflottenstroms 41 zur Reinigungsdüse 25 abgezweigt. Der verbleibende Spülflottenstrom 42 wird an den vorgenannten Sprüheinrichtungen bereitgestellt, um trotz Reinigung des Filterelements 17 gleichzeitig eine Reinigung des in der Spülkammer 4 angeordneten Spülguts zu ermöglichen. Alternativ kann die Wasserweiche 40 den gesamten Spülflottenstrom 41 der Reinigungsdüse 25 zuführen. In diesem Fall werden die Sprüheinrichtungen in der Spülkammer 4 vorübergehend nicht mit Spülflotte beaufschlagt. Noch weiter alternativ kann eine separate Umwälzpumpe (nicht gezeigt) zusätzlich zu der Umwälzpumpe 21 vorgesehen sein, welche (nur) für Reinigung des Filterelements 17 zuständig ist und dazu Spülflotte aus dem Pumpentopf 15 entnimmt und die Reinigungsdüse 25 damit zur Erzeugung des Wasserstrahls 30 beaufschlagt.

Gemäß einer alternativen Ausführungsform wird die Reinigungsdüse 25 über einen Frischwasseranschluss 45 mit Frischwasser beaufschlagt. Das Frischwasser wird also nicht dem Spülkreislauf entnommen, sondern von außen an der Haushalts-Geschirrspülmaschine 1 bereitgestellt.

Weiterhin zeigt Fig. 3 ein Flächensieb 46 und ein Grobsieb 47. Das Grobsieb 47 ist beispielsweise kreiszylindrisch gebildet und durchdringt das Flächensieb 46 von oben nach unten. Das Grobsieb 47 ist zur Spülkammer 4 hin an einer Seite 48 offen und an einer Seite 49 geschlossen ausgebildet. Damit ergeben sich im Spülbetrieb ein erster und ein zweiter Spülflottenstrom, nämlich ein Spülflottenstrom 50 und ein Spülflottenstrom 51. Der Spülflottenstrom 50 führt durch das Flächensieb 46, wobei durch das Flächensieb 46 aufgrund seiner Lochung beispielsweise Partikel größer 0,8 mm zurückgehalten werden. Der Spülflottenstrom 51 führt dagegen durch das Grobsieb 47 ist beispielsweise als Kunststoffkäfig ausgebildet und hält Partikel mit einem Durchmesser größer 5 mm, wie etwa Kerne, zurück. Die Siebe 46 und 47 sind in Fig. 2 aus Gründen der Übersichtlichkeit nicht dargestellt. Die Spülflottenströme 50, 51 vereinigen sich im Pumpentopf 15 und fließen beide über den Gehäusequerschnitt 20 durch das Filterelement 17.

Weiter weist die Haushalts-Geschirrspülmaschine 1 eine Steuereinrichtung 52 auf. Die Steuereinrichtung 52 ist dazu eingerichtet, die Umwälzpumpe 21, die Laugenpumpe 38, die Antriebseinrichtung 24 und die Wasserweiche 40 (oder den Frischwasseranschluss 45 in anderen Ausführungsformen) anzusteuern. Dazu weist die Steuereinrichtung 52 beispielsweise einen Mikroprozessor samt zugeordneter Speichermittel, wie etwa ROM oder RAM auf. Die Steuereinrichtung 52 ist einmal dazu eingerichtet, die Haushalts-Geschirrspülmaschine 1 zum Ausführen eines Spülprogramms anzusteuern. Das Spülprogramm kann sich aus mehreren Spülprogrammabschnitten, wie etwa einem Vorspülen, einem Hauptwaschgang, einem Klarspülen und einem Abpumpen, zusammensetzen.

Ferner ist die Steuereinrichtung 52 dazu eingerichtet, die Wasserweiche 40 derart anzusteuern, dass sie bei Bedarf der Reinigungsdüse 25 den Spülflottenstrom 39 bereitstellt, um das Filterelement 17 mithilfe des Wasserstrahls 30 zu reinigen. Sensiert die Steuereinrichtung 52 beispielsweise einen zunehmenden Strömungswiderstand - dies etwa durch Überwachung der Leistungsaufnahme der Umwälzpumpe 21 -, so steuert sie die Antriebseinrichtung 24 zum Drehen des Filterelements 17 um 180° an. Damit ist nunmehr der zweite Teilbereich 27 unter der Spülflottenoberfläche 28 und der erste Teilbereich 26 oberhalb dieser angeordnet. Folglich steht nun ein nicht verstopfter Teilbereich 27 des Filterelements 17 für die Reinigung zur Verfügung, wohingegen der dann verstopfte Teilbereich 26 mithilfe der Reinigungsdüse 25 abgereinigt werden kann. Das Drehen des Filterelements 17 sowie das Abreinigen mithilfe der Reinigungsdüse 25 können einmal oder mehrmals pro Spülzyklus erfolgen. Zum Ende dieses Reinigungsvorgangs können die abgesunkenen Partikel 37 mittels der Laugenpumpe 38 abgepumpt werden. Alternativ kann das Abpumpen mittels der Laugenpumpe 38 am Ende des Spülzyklus erfolgen.

Gemäß einer Variante, die anhand von Fig. 4 verdeutlicht ist, weist das Filterelement 17 in dem ersten Teilbereich 26 eine Lochung mit einem ersten Lochdurchmesser D₁ und in dem zweiten Teilbereich 27 eine Lochung mit dem Lochdurchmesser D₂ auf. Dabei ist D, kleiner als D₂. So kann beispielsweise das Filterelement 17 nicht nur dann gedreht werden, wenn festgestellt wird, dass der durchströmte Teilbereich verstopft ist. Vielmehr kann ein Drehen auch dann erfolgen, wenn von einem Spülprogrammabschnitt in den nächsten Spülprogrammabschnitt gewechselt wird. So kann zum Beispiel ein Reinigen der Spülflotte 18 im Hauptwaschgang mithilfe des Teilbereichs 27 (große Löcher) genügen, wohingegen während eines Klarspülens ein kleiner Lochdurchmesser (entsprechend dem ersten Teilbereich 26 mit dem Lochdurchmesser D₁) verwendet wird und somit bessere Reinigungsergebnisse erzielt werden.

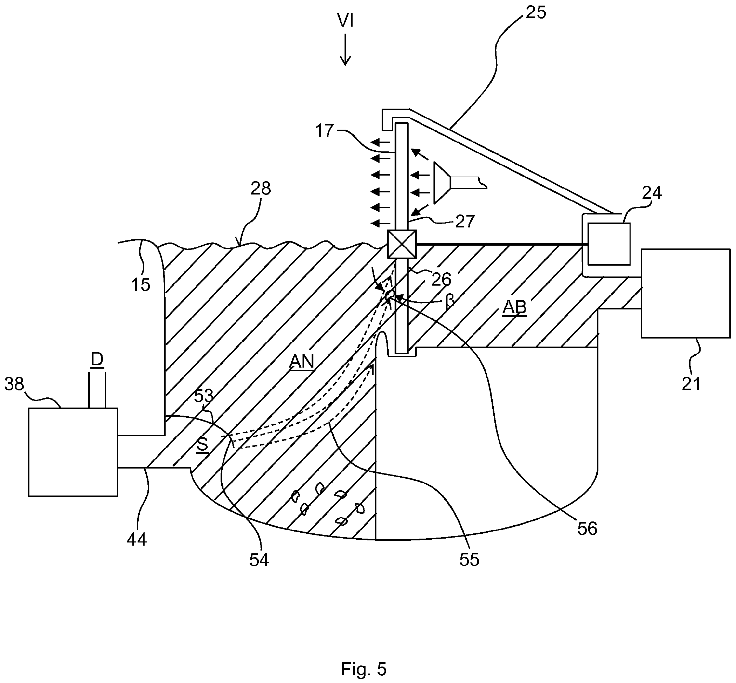

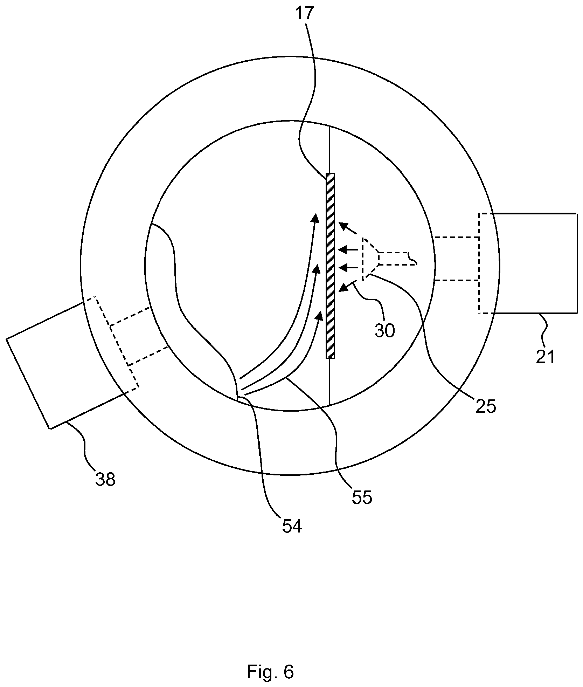

Fig. 5 zeigt das Ausführungsbeispiel gemäß den Fig. 3 und 4 in einer Variante, wobei einige Komponenten gegenüber Fig. 3 der besseren Übersichtlichkeit halber nicht dargestellt wurden. Fig. 6 zeigt eine Draufsicht VI aus Fig. 5.

Gemäß der Variante wird - gegenüber dem Ausführungsbeispiel gemäß den Fig. 3 und 4 zusätzlich - ein Deckel 53 der Laugenpumpe 38 mit einer Reinigungsdüse 54 vorgesehen. Die Reinigungsdüse 54 kann beispielsweise als Durchbruch in dem Deckel 53 ausgebildet sein. Der Deckel 53 deckt den Anschluss 44 der Laugenpumpe 38 am Pumpentopf 15 teilweise ab. Eine solche Abdeckung ist erforderlich, um einen Gegendruck zu dem Pumpenrad (nicht dargestellt) der Laugenpumpe 38 zu erzeugen, damit diese die Spülflotte 18 aus dem Pumpentopf 15 in den Abwasseranschluss der Haushalts-Geschirrspülmaschine 1 abpumpen kann.

Mit S ist in Fig. 5 die Saugseite der Laugenpumpe 38 im Bereich des Pumpentopfs 15 bezeichnet. Die Druckseite D der Laugenpumpe 38 ist ebenfalls gekennzeichnet und entspricht der Richtung zum Abwasseranschluss hin. Aufgrund der Strömungsverhältnisse ergibt sich auf der Saugseite auch gleichzeitig ein Überdruck im Bereich der Reinigungsdüse 54 in dem Deckel 53. Aus der Reinigungsdüse 54 tritt somit ein Wasserstrahl 55 aus, welcher das Filterelement 17 von unten tangential, beispielsweise unter einem Winkel β kleiner 30° anströmt. Dadurch wird ein Zusetzen des durchströmten Teilbereichs 26 des Filterelements 17 auf der Anströmseite AN verlangsamt oder sogar verhindert.

Der Wasserstrahl 55 kann im Spülbetrieb unter der Spülflottenoberfläche 28 liegen. Jedoch kann es beim zunehmendem Abpumpen mittels der Laugenpumpe 38 dazu kommen, dass der Wasserstrahl 55 aus der absinkenden Spülflottenoberfläche 28 heraustritt und sodann über eine freie Strecke (nicht gezeigt) auf dem Teilbereich 26 (auf der Anströmseite AN) des Filterelements 17 auftrifft und dort Partikel 56 abreinigt.

Das im Zusammenhang mit den Fig. 5 und 6 beschriebene Reinigungsprinzip lässt sich auch losgelöst von der Drehbarkeit des Filterelements 17 verwenden. So kann zum Beispiel die Reinigung des Filterelements 17 (nicht drehbar und im Spülbetrieb vorzugsweise vollständig unter der Spülflottenoberfläche 28 angeordnet) allein mithilfe des Wasserstrahls 55 erfolgen.

Obwohl die vorliegende Erfindung anhand von Ausführungsbeispielen beschrieben wurde, ist sie vielfältig modifizierbar.

### Verwendete Bezugszeichen:

- 1: Haushalts-Geschirrspülmaschine
- 2: Spülbehälter
- 3: Tür
- 4: Spülkammer
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Pumpentopf
- 16: Filtersystem
- 17: Filterelement
- 18: Spülflotte
- 19: Außenkontur
- 20: Querschnitt
- 21: Umwälzpumpe
- 22: Drehachse
- 23: Welle
- 24: Antriebseinrichtung
- 25: Reinigungsdüse
- 26: Teilbereich
- 27: Teilbereich
- 28: Spülflottenoberfläche
- 29: freie Strecke
- 30: Wasserstrahl
- 31: Partikel
- 32: Absinkzone
- 33: Boden
- 34: Unterkante
- 35: Abschnitt
- 36: Abschnitt
- 37: Partikel
- 38: Laugenpumpe
- 39: Spülflotte
- 40: Wasserweiche
- 41: Spülflotte
- 42: Spülflotte
- 43: Anschluss
- 44: Anschluss
- 45: Frischwasseranschluss
- 46: Flächensieb
- 47: Grobsieb
- 48: Seite
- 49: Seite
- 50: Spülflottenstrom
- 51: Spülflottenstrom
- 52: Steuereinrichtung
- 53: Deckel
- 54: Düse
- 55: Wasserstrahl
- 56: Partikel

## Patentansprüche

1. Haushalts-Geschirrspülmaschine (1) mit einem selbstreinigenden Filtersystem (16), welches ein drehbar gelagertes Filterelement (17) zum Filtern von Spülflotte (18), eine Antriebseinrichtung (24), welche dazu eingerichtet ist, das Filterelement (17) um eine Drehachse (22) zu drehen, und eine Reinigungsdüse (25) aufweist, welche dazu eingerichtet ist, je nach Drehstellung (α) des Filterelements (17) unterschiedliche Teilbereiche (26, 27) des Filterelements (17) mithilfe eines Wasserstrahls (30) zu reinigen,
wobei die Haushalts-Geschirrspülmaschine (1) einen Pumpentopf (15) aufweist, in welchem das Filterelement (17) drehbar gelagert vorgesehen ist, wobei die Drehachse (22) des Filterelements (17) horizontal angeordnet ist, und wobei in einem Spülbetrieb des Haushaltsgeräts (1) ein erster Teilbereich (26) des Filterelements (17) von Spülflotte (18) durchströmt und ein zweiter Teilbereich (27) des Filterelements (17) oberhalb einer Oberfläche (28) der Spülflotte angeordnet ist, und wobei die Reinigungsdüse (25) dazu eingerichtet ist, den zweiten Teilbereich (27) zu reinigen, und
wobei die Haushalts-Geschirrspülmaschine (1) eine Absinkzone (32) vor dem Filterelement (17) aufweist, wobei die Absinkzone (32) durch einen Gehäuseabschnitt des Pumpentopfs (15) gebildet wird, dessen Boden (33) unterhalb einer Unterkante (34) des Filterelements (17) liegt, und wobei die Absinkzone (32) dazu eingerichtet ist, von dem zweiten Teilbereich (26) des Filterelements (17) mithilfe des Wasserstrahls (30) abgereinigte Partikel (37) aufzunehmen, wobei ein Höhenniveau der Absinkzone (32) unterhalb der Unterkante (34) des Filterelements (17) liegt, und
wobei eine Laugenpumpe (38) vorgesehen ist, welche ihren Sauganschluss (44) angrenzend an die Absinkzone (32) aufweist.

2. Haushalts-Geschirrspülmaschine nach Anspruch 1, **dadurch gekennzeichnet, dass** die Reinigungsdüse (25) oberhalb der Oberfläche (28) der Spülflotte angeordnet ist.

3. Haushalts-Geschirrspülmaschine nach Anspruch 1 oder 2, **dadurch gekennzeichnet, dass** das Filterelement (17) ein Feinsieb ist und/oder das Filtersystem (16) zusätzlich ein Grobsieb (47) und/oder ein Flächensieb (46) aufweist.

4. Haushalts-Geschirrspülmaschine nach einem der Ansprüche 1 bis 3, **gekennzeichnet durch** eine Umwälzpumpe (21), welche dazu eingerichtet ist, die Spülflotte (18) in der Haushalts-Geschirrspülmaschine (1) umzuwälzen, wobei die Umwälzpumpe (21) die Spülflotte (18) über einen Querschnitt (20) aus dem Pumpentopf (15) ansaugt und das Filterelement (17) den gesamten Querschnitt (20) verschließt.

5. Haushalts-Geschirrspülmaschine nach einem der Ansprüche 1 bis 4, **gekennzeichnet durch** einen Frischwasseranschluss (45), welcher dazu eingerichtet ist, die Reinigungsdüse (25) mit Frischwasser zwecks Erzeugens des Wasserstrahls (30) zu beaufschlagen.

6. Haushalts-Geschirrspülmaschine nach einem der Ansprüche 1 bis 5, **gekennzeichnet durch** eine Umwälzpumpe (21), welche dazu eingerichtet ist, die Spülflotte (18) in der Haushalts-Geschirrspülmaschine (1) umzuwälzen, und eine Wasserweiche (40), welche dazu eingerichtet ist, die Reinigungsdüse (25) mit der umgewälzten Spülflotte (41) oder einer Teilmenge (39) derselben zwecks Erzeugens des Wasserstrahls (30) zu beaufschlagen.

7. Haushalts-Geschirrspülmaschine nach einem der Ansprüche 1 bis 6, **gekennzeichnet durch** eine Steuereinrichtung (52), welche dazu eingerichtet ist, die Haushalts-Geschirrspülmaschine (1) zum Ausführen eines Spülprogramms anzusteuern, wobei die Steuereinrichtung (52) ferner dazu eingerichtet ist, das selbstreinigende Filtersystem (16) vor, zu Beginn, während und/oder zum Ende des Spülprogramms zur Reinigung zumindest eines Teilbereichs (26, 27) des Filterelements (17) anzusteuern.

8. Haushalts-Geschirrspülmaschine nach einem der Ansprüche 1 bis 7, **dadurch gekennzeichnet, dass** die unterschiedlichen Teilbereiche (26, 27) des Filterelements (17) eine Lochung mit unterschiedlichen Durchmessern (D₁, D₂) aufweisen.

9. Haushalts-Geschirrspülmaschine nach einem der Ansprüche 1 bis 8, **gekennzeichnet durch** eine Steuereinrichtung (52), welche dazu eingerichtet ist, die Haushalts-Geschirrspülmaschine (1) zum Ausführen eines Spülprogramms mit zumindest einem ersten und einem zweiten Spülprogrammabschnitt anzusteuern, wobei die Steuereinrichtung (52) ferner dazu eingerichtet ist, das selbstreinigende Filtersystem (16) derart anzusteuern, dass während des ersten Spülprogrammabschnitts der erste Teilbereich (26) des Filterelements (17) und während des zweiten Spülprogrammabschnitts der zweite Teilbereich (27) des Filterelements (17) von Spülflotte (18) durchströmt ist.

10. Verfahren zum Betreiben eines selbstreinigenden Filtersystems (16) in einer Haushalts-Geschirrspülmaschine (1), wobei das selbstreinigende Filtersystem (16) ein drehbar gelagertes Filterelement (17) zum Filtern von Spülflotte (18), eine Antriebseinrichtung (24) zum Drehen des Filterelements (17) um eine Drehachse (22), wobei die Drehachse (22) des Filterelements (17) horizontal angeordnet ist, und eine Reinigungsdüse (25) zum Reinigen, je nach Drehstellung (α) des Filterelements (17), eines ersten Teilbereichs (26) und eines zweiten Teilbereichs (27) des Filterelements (17) mithilfe eines Wasserstrahls (30) aufweist, wobei die Haushalts-Geschirrspülmaschine (1) ferner einen Pumpentopf (15), in welchem das Filterelement (17) drehbar gelagert vorgesehen ist, und eine Absinkzone (32) vor dem Filterelement (17) zum Aufnehmen der von dem zweiten Teilbereich (26) mithilfe des Wasserstrahls abgereinigten Partikel (37), aufweist, wobei die Absinkzone (32) durch einen Gehäuseabschnitt des Pumpentopfs (15) gebildet wird, dessen Boden (33) unterhalb einer Unterkante (34) des Filterelements (17) liegt, wobei ein Höhenniveau der Absinkzone (32) unterhalb der Unterkante (34) des Filterelements (17) liegt, und wobei in der Haushalts-Geschirrspülmaschine (1) ferner eine Laugenpumpe (38) vorgesehen ist, welche ihren Sauganschluss (44) angrenzend an die Absinkzone (32) aufweist, wobei:
in einem Spülbetrieb der Haushalts-Geschirrspülmaschine (1) der erste Teilbereich (26) von Spülflotte (18) durchströmt wird und der zweite Teilbereich (27) oberhalb einer Oberfläche (28) der Spülflotte angeordnet wird,
die Reinigungsdüse (25) den zweiten Teilbereich (27) mittels des Wasserstrahls (30) reinigt,
die abgereinigten Partikel (37) aus der Absinkzone (32) mittels der Laugenpumpe (38) abgepumpt werden, und
das Filterelement (17) mittels der Antriebseinrichtung (24) um die Drehachse (22) gedreht wird.

## Claims

1. Household dishwasher (1) having a self-cleaning filter system (16), which has a rotatably mounted filter element (17) for filtering washing liquor (18), a drive facility (24) which is designed to rotate the filter element (17) about an axis of rotation (22), and a cleaning nozzle (25), which is designed to clean different subregions (26, 27) of the filter element (17) with the aid of a water jet (30) depending on the rotational position (α) of the filter element (17),
wherein the household dishwasher (1) has a sump (15), in which the filter element (17) is provided in a rotatably mounted manner, wherein the axis of rotation (22) of the filter element (17) is arranged horizontally and wherein in a washing operation of the household appliance (1), a first subregion (26) of the filter element (17) is passed through by washing liquor (18) and a second subregion (27) of the filter element (17) is arranged above a surface (28) of the washing liquor, and wherein the cleaning nozzle (25) is designed to clean the second subregion (27) and wherein the household dishwasher (1) has a draw-down zone (32) upstream of the filter element (17), wherein the draw-down zone (32) is formed by a housing section of the sump (15), the base (33) of which lies below a lower edge (34) of the filter element (17), and wherein the draw-down zone (32) is designed to receive particles (37) cleaned off from the second subregion (26) of the filter element (17) with the aid of the water jet (30), wherein a height level of the draw-down zone (32) lies below the lower edge (34) of the filter element (17), and wherein a lye pump (38) is provided, which has its suction connection (44) adjoining the draw-down zone (32).

2. Household dishwasher according to claim 1, **characterised in that** the cleaning nozzle (25) is arranged above the surface (28) of the washing liquor.

3. Household dishwasher according to claim 1 or 2, **characterised in that** the filter element (17) is a fine screen and/or the filter system (16) additionally has a coarse screen (47) and/or a flat screen (46).

4. Household dishwasher according to one of claims 1 to 3, **characterised by** a circulating pump (21), which is designed to circulate the washing liquor (18) in the household dishwasher (1), wherein the circulating pump (21) draws the washing liquor (18) out of the sump (15) by way of a cross-section (20) and the filter element (17) seals off the entire cross-section (20).

5. Household dishwasher according to one of claims 1 to 4, **characterised by** a fresh water connection (45), which is designed to apply fresh water to the cleaning nozzle (25) for the purpose of generating the water jet (30).

6. Household dishwasher according to one of claims 1 to 5, **characterised by** a circulating pump (21), which is designed to circulate the washing liquor (18) in the household dishwasher (1) and a water switch (40) which is designed to apply the cleaning nozzle (25) with the circulated washing liquor (41) or a sub quantity (39) of the same for the purpose of generating the water jet (30).

7. Household dishwasher according to one of claims 1 to 6, **characterised by** a control facility (52) which is designed to actuate the household dishwasher (1) in order to execute a washing program, wherein the control facility (52) is further designed to actuate the self-cleaning filter system (16), before, at the start, during and/or at the end of the washing program for cleaning at least one subregion (26, 27) of the filter element (17).

8. Household dishwasher according to one of claims 1 to 7, **characterised in that** the different subregions (26, 27) of the filter element (17) have a hole with different diameters (D₁, D₂).

9. Household dishwasher according to one of claims 1 to 8, **characterised by** a control facility (52) which is designed to actuate the household dishwasher (1) for executing a washing program with at least one first and one second washing program section, wherein the control facility (52) is further designed to actuate the self-cleaning filter system (16) so that during the first washing program section and during the second washing program section, the first subregion (26) of the filter element (17) and the second subregion (27) of the filter element (17) are passed through by washing liquor (18) in each instance.

10. Method for operating a self-cleaning filter system (16) in a household dishwasher (1), wherein the self-cleaning filter system (16) has a rotatably mounted filter element (17) for filtering the washing liquor (18), a drive facility (24) for rotating the filter element (17) about an axis of rotation (22), wherein the axis of rotation (22) of the filter element (17) is arranged horizontally, and a cleaning nozzle (25) for cleaning, depending on the rotational position (α) of the filter element, a first subregion (26) and a second subregion (27) of the filter element (17) with the aid of a water jet (30), wherein the household dishwasher (1) further has a sump (15), in which the filter element (17) is rotatably mounted, and a draw-down zone (32) upstream of the filter element (17) for receiving the particles (37) cleaned from the second subregion (26) with the aid of the water jet, wherein the draw-down zone (32) is formed by a housing section of the sump (15), the base (33) of which lies below a lower edge (34) of the filter element (17), wherein a height level of the draw-down zone (32) lies below the lower edge (34) of the filter element (17), and wherein a lye pump (38) which has its suction connection (44) adjoining the draw-down zone (32) is further provided in the household dishwasher (1), wherein:
in a washing operation of the household dishwasher (1), the first subregion (26) is passed through by washing liquor (18) and the second subregion (27) is arranged above a surface (28) of the washing liquor,
the cleaning nozzle (25) cleans the second subregion (27) by means of the water jet (30),
the cleaned particles (37) are pumped out of the draw-down zone (32) by means of the lye pump (38), and
the filter element (17) is rotated about the axis of rotation (22) by means of the drive facilty (24).

## Revendications

1. Lave-vaisselle électroménager (1) comprenant un système de filtrage autonettoyant (16), lequel présente un élément filtrant (17) logé à rotation destiné au filtrage du bain de lavage (18), un dispositif d'entraînement (24) configuré pour faire tourner l'élément filtrant (17) autour d'un axe de rotation (22), et un gicleur de nettoyage (25) configuré pour nettoyer en fonction de la position de rotation (α) de l'élément filtrant (17) différentes parties de zones (26, 27) de l'élément filtrant (17) à l'aide d'un jet d'eau (30)
dans lequel le lave-vaisselle électroménager (1) présente un boîtier pour pompe (15) logeant l'élément filtrant (17) à rotation, dans lequel l'axe de rotation (22) de l'élément filtrant (17) se trouve à l'horizontale, et dans lequel, lors du fonctionnement de lavage de l'appareil électroménager (1), une première partie de zone (26) de l'élément filtrant (17) est parcourue par le bain de lavage (18) et une deuxième partie de zone (27) de l'élément filtrant (17) se trouve au-dessus de la surface (28) du bain de lavage, et dans lequel le gicleur de nettoyage (25) est configuré pour nettoyer la deuxième partie de zone (27), et dans lequel le lave-vaisselle électroménager (1) présente une zone affaissée (32) devant l'élément filtrant (17), dans lequel la zone affaissée (32) est formée par une section enveloppante du boîtier pour pompe (15) dont le fond (33) se trouve en dessous d'une arête inférieure (34) de l'élément filtrant (17), et dans lequel la zone affaissée (32) est configurée pour capter les particules (37) nettoyées de la deuxième partie de zone (26) de l'élément filtrant (17) à l'aide du jet d'eau (30), dans lequel un niveau en hauteur de la zone affaissée (32) se situe en dessous de l'arête inférieure (34) de l'élément filtrant (17), et
dans lequel une pompe de vidange (38) est prévue, laquelle a son raccord d'aspiration (44) tout contre la zone affaissée (32).

2. Lave-vaisselle électroménager selon la revendication 1, **caractérisé en ce que** le gicleur de nettoyage (25) se trouve au-dessus de la surface (28) du bain de lavage.

3. Lave-vaisselle électroménager selon la revendication 1 ou 2, **caractérisé en ce que** l'élément filtrant (17) est un filtre à mailles fines et/ou le système de filtrage (16) présente en outre un filtre à mailles larges (47) et/ou un filtre plat (46).

4. Lave-vaisselle électroménager selon l'une des revendications 1 à 3, **caractérisé par** une pompe de circulation (21) configurée pour faire circuler le bain de lavage (18) dans le lave-vaisselle électroménager (1), la pompe de circulation (21) aspirant le bain de lavage (18) par une section (20) du boîtier pour pompe (15) et l'élément filtrant (17) refermant toute la section (20).

5. Lave-vaisselle électroménager selon l'une des revendications 1 à 4, **caractérisé par** un raccord à l'eau douce (45) configuré pour alimenter le gicleur de nettoyage (25) en eau douce à des fins de production du jet d'eau (30).

6. Lave-vaisselle électroménager selon l'une des revendications 1 à 5, **caractérisé par** une pompe de circulation (21) configurée pour faire circuler le bain de lavage (18) dans le lave-vaisselle électroménager (1) et un distributeur d'eau (40) configuré pour alimenter le gicleur de nettoyage (25) en bain de lavage mis en circulation (41) ou une quantité partielle (39) de celui-ci pour produire le jet d'eau (30).

7. Lave-vaisselle électroménager selon l'une des revendications 1 à 6, **caractérisé par** un dispositif de commande (52) configuré pour commander le lave-vaisselle électroménager (1) pour qu'il exécute un programme de lavage, dans lequel le dispositif de commande (52) est en outre configuré pour commander le système de filtrage (16) autonettoyant avant, au début, pendant et/ou à la fin du programme de lavage dans le but de nettoyer au moins une partie de zone (26, 27) de l'élément filtrant (17).

8. Lave-vaisselle électroménager selon l'une des revendications 1 à 7, **caractérisé en ce que** les différentes parties de zone (26, 27) de l'élément filtrant (17) présentent des trous de diamètres différents (D₁, D₂).

9. Lave-vaisselle électroménager selon l'une des revendications 1 à 8, **caractérisé par** un dispositif de commande (52) configuré pour commander le lave-vaisselle électroménager (1) pour qu'il exécute un programme de lavage comprenant au moins un premier et un deuxième segment de programme de lavage, dans lequel le dispositif de commande (52) est en outre configuré pour commander le système de filtrage autonettoyant (16) de sorte que le bain de lavage (18) parcourt, pendant le premier segment de programme de lavage, la première partie de zone (26) de l'élément filtrant (17) et pendant le deuxième segment de programme de lavage, la deuxième partie de zone (27) de l'élément filtrant (17).

10. Procédé de fonctionnement d'un système de filtrage autonettoyant (16) dans un lave-vaisselle électroménager (1), dans lequel le système de filtrage autonettoyant (16) présente un élément filtrant (17) logé à rotation destiné au filtrage du bain de lavage (18), un dispositif d'entraînement (24) destiné à la rotation de l'élément filtrant (17) autour d'un axe de rotation (22), l'axe de rotation (22) de l'élément filtrant (17) se trouvant à l'horizontale, et un gicleur de nettoyage (25) pour le nettoyage, en fonction de la position de rotation (α) de l'élément filtrant (17), d'une première partie de zone (26) et d'une deuxième partie de zone (27) de l'élément filtrant (17) à l'aide d'un jet d'eau (30), dans lequel le lave-vaisselle électroménager (1) présente encore un boîtier pour pompe (15), dans lequel l'élément filtrant (17) est prévu logé à rotation, et une zone affaissée (32) devant l'élément filtrant (17) qui capte les particules (37) nettoyées de la deuxième partie de zone (26) à l'aide du jet d'eau, dans lequel la zone affaissée (32) est formée par une section enveloppante du boîtier pour pompe (15) dont le fond (33) se trouve en dessous d'une arête inférieure (34) de l'élément filtrant (17), dans lequel un niveau en hauteur de la zone affaissée (32) se situe en dessous de l'arête inférieure (34) de l'élément filtrant (17), et dans lequel, dans le lave-vaisselle électroménager (1), est en outre prévue une pompe de vidange (38), laquelle a son raccord d'aspiration (44) tout contre la zone affaissée (32), dans lequel :
pendant le fonctionnement de lavage du lave-vaisselle électroménager (1), la première partie de zone (26) est parcourue par le bain de lavage (18) et la deuxième partie de zone (27) se trouve au-dessus d'une surface (28) du bain de lavage,
le gicleur de nettoyage (25) nettoie la deuxième partie de zone (27) au moyen du jet d'eau (30),
les particules nettoyées (37) sont évacuées par pompage de la zone affaissée (32) au moyen de la pompe de vidange (38), et
l'élément filtrant (17) tourne au moyen du dispositif d'entraînement (24) autour de l'axe de rotation (22).
